# EUROPÄISCHE PATENTSCHRIFT

(11) **EP 0 638 712 B1**
(45) Veröffentlichungstag und Bekanntmachung des Hinweises auf die Patenterteilung: **13.11.1996**
(21) Anmeldenummer: 94110529.8
(22) Anmeldetag: 06.07.1994
(51) Int. Cl.: F01P 7/16, B60H 1/03, B60L 11/18, H01M 8/04, B60K 11/02

(54) **Kühlmittelkreislauf**
Coolant circuit
Circuit d'agent de refroidissement

(30) Priorität: 13.08.1993 DE 4327261
(43) Veröffentlichungstag der Anmeldung: 15.02.1995
(73) Patentinhaber: DAIMLER-BENZ AKTIENGESELLSCHAFT, 70567 Stuttgart (DE)
(72) Erfinder: Rennefeld, Alfons, Dipl.-Ing., DE-70327 Stuttgart (DE); Friedrich, Jürgen, Dr., D-73732 Esslingen (DE); Noreikat, Karl-Ernst, Dipl.-Ing., D-73733 Esslingen (DE)

(56) Entgegenhaltungen:
- EP-A- 0 275 720
- EP-A- 0 295 629
- WO-A-93/02884
- DE-A- 3 738 412
- DE-A- 4 125 768
- GB-A- 931 087

## Beschreibung

Die Erfindung betrifft eine Vorrichtung zur Kühlung von Fahrzeugkomponenten gemäß dem Oberbegriff des Hauptanspruchs.

Aus der DE-OS 37 38 412 ist eine Vorrichtung zur Motorkühlung bekannt, bei der der Motor über einen Kühlmittelkreislauf mit einem ersten Wärmetauscher mit zugeordnetem Lüfter verbunden ist. Die Förderleistung des Lüfters und einer im ersten Kühlmittelkreislauf angeordneten Kühlmittelpumpe wird von einem Steuergerät in Abhängigkeit von Betriebsparametern gesteuert. In einer parallel zum ersten Wärmetauscher angeordneten und mittels eines Ventils absperrbaren Bypassleitung ist ein zweiter Wärmetauscher, dessen Abwärme zu Heizungszwecken verwendet werden kann, vorgesehen.

Es ist die Aufgabe der Erfindung eine gattungsgemäße Vorrichtung so weiterzubilden, daß zwei Fahrzeugaggregate, deren Kühlmitteltemperaturen sich auf unterschiedlichen Niveau befinden, zu kühlen, wobei gleichzeitig die für den Fahrgastraum bereitgestellte Heizleistung optimiert werden soll.

Die Aufgabe wird durch die kennzeichnenden Merkmale des Patentanspruchs 1 gelöst.

Die Kopplung der beiden Kühlmittelkreisläufe über einen gemeinsamen Wärmetauscher, dessen Abwärme zum Beheizen des Fahrgastraumes verwendet wird, bietet den Vorteil, daß zum einen bei geschlossenem Ventil beide Kühlmittelkreisläufe völlig getrennt sind, wobei dann nur der zweite Kühlmittelkreislauf zum Beheizen des Fahrgastraumes zur Verfügung steht. Dagegen dienen bei geöffnetem Ventil beide Kühlmittelkreisläufe zum Beheizen des Fahrgastraumes.

Weitere Vorteile und Ausgestaltungen gehen aus den Unteransprüchen und der Beschreibung hervor. Die Erfindung ist nachstehend anhand einer Zeichnung naher beschrieben, wobei
- Fig. 1: eine Prinzipdarstellung eines Ausführungsbeispiels einer erfindungsgemäßen Vorrichtung und
- Fig. 2: ein weiteres Ausführungsbeispiel einer erfindungsgemäßen Vorrichtung zeigen.

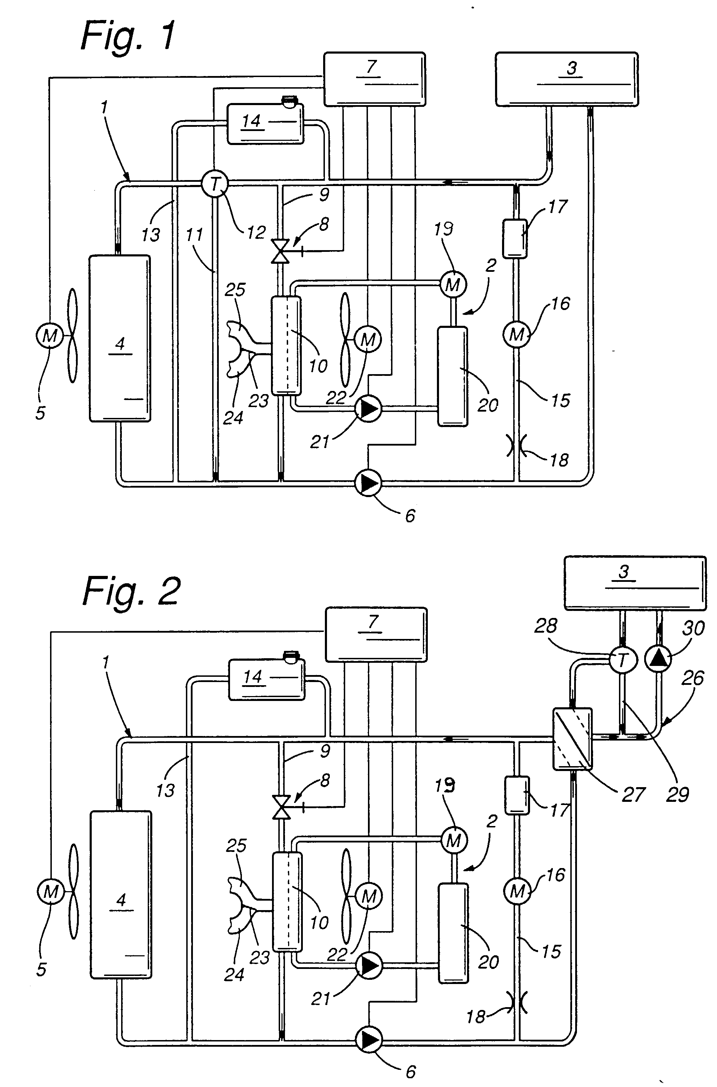

In den Fig. 1 und 2 sind zwei insgesamt mit 1, 2 bezeichnete Fahrzeug-Kühlmittelkreisläufe dargestellt. Im ersten Kühlmittelkreislauf 1 ist ein erstes zu kühlendes Aggregat, beispielsweise eine Brennstoffzelleneinheit 3 und ein erster, als Kühler verwendeter Wärmetauscher 4 vorgesehen. Der Kühler 4 kann mittels eines Lüfters 5 mit Frischluft beaufschlagt werden. Außerdem ist im ersten Kühlmittelkreislauf 1 eine Kühlmittelpumpe 6 angeordnet, die ebenso wie der Lüfter 5 von einer Steuereinheit 7 in Abhängigkeit von Betriebsparametern gesteuert werden kann.

Parallel zum Kühler 4 ist eine erste, mittels eines Ventils 8 steuerbare Bypassleitung 9 vorgesehen, in der ein zweiter Wärmetauscher 10 angeordnet ist. Eine zweite Bypassleitung 11 ist über ein Thermoventil 12, das stromauf des Kühlers 4 im ersten Kühlmittelkreislauf 1 angeordnet ist, mit dem ersten Kühlmittelkreislauf 1 verbunden. Dadurch kann der Kühlmittelstrom in Abhängigkeit von der Stellung des Thermoventils auf den Kühler 4 und die zweite Bypassleitung 11 aufgeteilt werden. Schließlich ist in einer dritten Bypassleitung 13 ein Ausgleichsbehälter 14 integriert, mit dessen Hilfe das Kühlmittelniveau im ersten Kühlkreislauf 1 reguliert werden kann. Da die dritte Bypassleitung 13 stromauf der ersten und zweiten Bypassleitung 9, 11 vom ersten Kühlmittelkreislauf 1 abzweigt, ist der Ausgleichsbehälter 14 unabhängig von der Stellung der Ventile 8, 12 ständig mit dem ersten Kühlmittelkreislauf 1 verbunden.

Parallel zur Brennstoffzelleneinheit 3 ist eine vierte Bypassleitung 15, in der weitere zu kühlende Aggregate, beispielsweise ein wassergekühlter Kompressorantrieb 16 und ein Brennstoffzellen-Luftkühler 17 angeordnet sind, vorgesehen. Der Kompressor dient zur Regelung der Luftzufuhr zur Brennstoffzelleneinheit 3, wobei der zugeführte komprimierte Luftstrom mit Hilfe des Brennstoffzellen-Luftkühlers 17 gekühlt werden kann. Der die vierte Bypassleitung durchströmende Kühlmittelstrom kann mittels einer Drosselstelle 18 an den jeweiligen Bedarf angepaßt werden.

Im zweiten Kühlmittelkreislauf 2 sind weitere zu kühlende Aggregate, beispielsweise ein Elektro-Fahrmotor 19 mit zugehörigem Leistungssteller 20 angeordnet. Der zweite Kühlmittelkreislauf 2, in dem eine zweite Kühlmittelpumpe 21 angeordnet ist, ist an den zweiten Wärmetauscher 10 gekoppelt. Der zweite Wärmetauscher 10 ist mittels eines zweiten Lüfters 22 mit Frischluft beaufschlagbar. Die Frischluft, die nach dem Durchströmen des zweiten Wärmetauschers 10 erwärmt ist, kann über ein Klappensystem 23 in Abhängigkeit vom momentanen Heizbedarf durch einen Heizluftkanal 25 in den Fahrgastraum geleitet oder durch einen Abluftkanal 24 an die Umgebung abgegeben werden.

Das Steuergerät 7 ist über Leitungen mit den Ventilen 8, 12, den Lüftern 5, 22 und den Kühlmittelpumpen 6, 21 verbunden. Daher kann das Steuergerät 7 in Abhängigkeit von Fahrzeug- beziehungsweise Betriebsparametern die Stellung der Ventile 8,12 beziehungsweise die Leistung der Lüfter 5, 22 und der Kühlmittelpumpen 6, 21 steuern. Beispielsweise ist das Thermoventil 12 nach dem Start des Fahrzeugs solange geschlossen, bis der erste Kühlmittelkreislauf eine vorgegebene Temperatur erreicht. In der geschlossenen Stellung wird kein Kühlmittel durch den Kühler 4, sondern das gesamte Kühlmittel durch die Bypassleitung 11 geführt. Dadurch wird erreicht, daß die Brennstoffzelleneinheit 3 möglichst schnell seine Betriebstemperatur erreicht.

Anschließend kann dann die Temperatur der Brennstoffzelleneinheit 3 durch das Steuergerät durch Steuerung oder Regelung der Stellung des Thermoventils 12 und/oder des Ventils 8 auf einer vorgegebene Betriebstemperatur gehalten werden. Selbstverständlich kann auch ein mechanisches Thermoventil 12 verwendet werden.

Bei geschlossenem Ventil 8 sind die beiden Kühlmittelkreisläufe 1, 2, die im allgemeinen unterschiedliche Temperaturniveaus aufweisen, vollständig entkoppelt. Der erste Kühlmittelkreislauf 1, der ein höheres Temperaturniveau aufweist, wird ausschließlich durch den Kühler 4 gekühlt, während die am Elektro-Fahrmotor 19 und dem zugehörigen Leistungssteller 20 entstehende Abwärme allein durch den Wärmetauscher 10 abgeführt wird. Das Ventil 8 wird immer dann vom Steuergerät 7 geschlossen, wenn allein die Kühlleistung des Kühlers 4 für den ersten Kühlmittelkreislauf 1 ausreicht und wenn der Heizbedarf die vom zweiten Kühlmittelkreislauf 2 abgegebene Wärme nicht übersteigt.

Bei geöffnetem Ventil 8 wird der Wärmetauscher 10 von beiden Kühlmittelkreisläufen 1, 2 durchströmt. Eine direkte Strömungsverbindung zwischen den beiden Kühlmittelkreisläufen 1, 2 besteht aber nicht. Das Ventil 8 wird immer dann geöffnet, wenn allein die Leistung des Kühlers 4 zur Kühlung des ersten Kühlmittelkreislaufs 1 nicht mehr ausreicht oder wenn für den Fahrgastraumes mehr Heizleistung angefordert wird, als der zweite Kühlmittelkreislauf 2 allein aufbringen kann. Der erste Fall tritt immer dann auf, wenn die Brennstoffzelle unter hoher Last betrieben wird. Im Leerlauf des Elektro-Fahrmotors 11 kann dagegen bei kühler Witterung zusätzliche Heizleistung benötigt werden. Das erste Kühlmittel wird dann auf den Kühler 4 und den Wärmetauscher 10 aufgeteilt.

Fig. 2 zeigt ein weiteres Ausführungsbeispiel. Dabei sind gleiche Teile gegenüber Fig. 1 mit gleichen Bezugsziffern gekennzeichnet. Im Gegensatz zu Fig. 1 ist hier die Brennstoffzelleneinheit 3 nicht direkt in den ersten Kühlmittelkreislauf 1 integriert, sondern über einen dritten Kühlmittelkreislauf 26 und einen Wasser-Wasser-Wärmetauscher 27 an den ersten Kühlmittelkreislauf 1 gekoppelt. Parallel zum Wärmetauscher 27 ist wiederum eine über ein zweites Thermoventil 28 gesteuerte vierte Bypassleitung 29 angeordnet. Da der Warmlauf der Brennstoffzelleneinheit 3 durch das Thermoventil 28 und die vierte Bypassleitung 29 gewährleistet ist, kann bei dieser Anordnung das Thermoventil 12 und die zweite Bypassleitung 11 entfallen. Außerdem ist auch im dritten Kühlmittelkreislauf 26 eine weitere Wasserpumpe 30, die bei Bedarf auch vom Steuergerät 7 gesteuert werden kann, vorgesehen. Bei dieser Anordnung kann der dritte Kühlmittelkreislauf 26 mit hochreinem Wasser, der erste und zweite Kühlmittelkreislauf 1, 2 dagegen mit normalem Wasser betrieben werden. Durch das hochreine Wasser werden Verunreinigungen in der Brennstoffzelleneinheit 3 verhindert oder zumindest verringert.

Neben den hier beschriebenen Anordnungen können selbstverständlich noch weitere Aggregate in die Kühlkreisläufe integriert oder weitere Kühlmittelkreisläufe an die gezeigten Kühlmittelkreisläufe gekoppelt werden.

## Patentansprüche

1. Vorrichtung zur Kühlung von Fahrzeugkomponenten mit einem Kühlmittelkreislauf (1), in dem ein erstes zu kühlendes Aggregat (3), ein erster Wärmetauscher (4) und ein Steuergerät (7) angeordnet sind, wobei das Steuergerät (7) in Abhängigkeit von Betriebsparametern zumindest die Förderleistung einer Kühlmittelpumpe (6) und eines dem ersten Wärmetauscher (4) zugeordneten Lüfters (5) steuert und wobei parallel zum ersten Wärmetauscher (4) eine mittels eines Ventils (8) steuerbare Bypassleitung (9) im Kühlmittelkreislauf (1) vorgesehen ist, in der ein zweiter mittels eines zweiten Lüfters (22) mit Frischluft beaufschlagbarer und zu Heizzwecken verwendeter Wärmetauscher (10) angeordnet ist,
**dadurch gekennzeichnet**,
daß der zweite Wärmetauscher (10) zusätzlich von einem zweiten Kühlmittelkreislauf (2), in dem zumindest ein weiteres Aggregat (19, 20) angeordnet ist, beaufschlagt ist.

2. Fahrzeugkühlkreislauf nach Anspruch 1,
**dadurch gekennzeichnet**,
daß im zweiten Kühlmittelkreislauf (2) eine zweite Kühlmittelpumpe (21) vorgesehen ist.

3. Fahrzeugkühlkreislauf nach Anspruch 1,
**dadurch gekennzeichnet**,
daß auch die Förderleistung der zweiten Kühlmittelpumpe (21) und/oder des zweiten Lüfters (22) vom Steuergerät (7) in Abhängigkeit von Betriebsparametern gesteuert wird.

4. Fahrzeugkühlkreislauf nach Anspruch 1,
**dadurch gekennzeichnet**,
daß die vom zweiten Wärmetauscher (10) erwärmte Luft wahlweise an die Umgebung abgegeben oder zu Heizzwecken in den Fahrgastraum geleitet wird.

5. Fahrzeugkühlkreislauf nach Anspruch 1,
**dadurch gekennzeichnet**,
daß das erste zu kühlende Aggregat eine Brennstoffzelleneinheit (3) ist.

6. Fahrzeugkühlkreislauf nach Anspruch 1,
**dadurch gekennzeichnet,**
daß das erste zu kühlende Aggregat ein Wasser/Wasserwärmetauscher (27) ist, der zusätzlich von einem dritten, die Brennstoffzelleneinheit (3) durchströmenden Kühlmittelkreislauf (26) beaufschlagt ist.

7. Fahrzeugkühlkreislauf nach Anspruch 5 oder 6,
**dadurch gekennzeichnet,**
daß im zweiten Kühlmittelkreislauf (2) ein Elektromotor (19) mit zugehörigem Leistungssteller (20) angeordnet ist.

8. Fahrzeugkühlkreislauf nach Anspruch 5 oder 6,
**dadurch gekennzeichnet,**
daß im ersten Kühlkreislauf (1) parallel zum zu kühlenden Aggregat (3) eine vierte Bypassleitung (15) vorgesehen ist, in der die Antriebseinheit (16) eines Kompressors zur Zufuhr von Luft zur Brennstoffzelleneinheit (3) und/oder ein dritter Wärmetauscher (17) zur Kühlung der der Brennstoffzelleneinheit (3) zugeführten Luft vorgesehen ist.

## Claims

1. Device for cooling vehicle components having a coolant circuit (1), in which a first unit (3) to be cooled, a first heat exchanger (4) and a control device (7) are arranged, whereby the control device (7) controls at least the delivery rate of a coolant pump (6) and a fan (5) assigned to the first heat exchanger (4) on the basis of operating parameters, and in which, in the coolant circuit (1) parallel with the first heat exchanger (4), a bypass line (9), controllable by a valve (8), is provided in which a second heat exchanger (10), supplied with fresh air by means of a second fan (22) and used for heating purposes, is arranged,
**characterised in that**
the second heat exchanger (10) is supplied in addition by a second coolant circuit (2), in which at least one additional unit (19, 20) is arranged.

2. Vehicle cooling circuit as claimed in claim 1,
**characterised in that**
a second coolant pump (21) is provided in the second coolant circuit (2).

3. Vehicle cooling circuit as claimed in claim 1,
**characterised in that**
the delivery rate of the second coolant pump (21) and/or the second fan (22) is also controlled by the control device (7) in conjunction with operating parameters.

4. Vehicle cooling circuit as claimed in claim 1,
**characterised in that**
the heated air from the second heat exchanger (10) can be discharged to the environment or used for the purpose of heating the passenger compartment as required.

5. Vehicle cooling circuit as claimed in claim 1,
**characterised in that**
the first unit to be cooled is a fuel cell unit (3).

6. Vehicle cooling circuit as claimed in claim 1,
**characterised in that**
the first unit to be cooled is a water/water heat exchanger (27), which is additionally supplied by a third coolant circuit (26) flowing through the fuel cell unit (3).

7. Vehicle cooling circuit as claimed in claim 5 or 6,
**characterised in that**
an electric motor (19) with its assigned power supply (20) is arranged in the second coolant circuit (2).

8. Vehicle cooling circuit as claimed in claim 5 or 6,
**characterised in that**
provided in the first coolant circuit (1) parallel with the unit (3) to be cooled is a fourth bypass line (15) in which the drive unit (16) of a compressor is provided for delivering air to the fuel cell unit (3) and/or a third heat exchanger (17) for cooling the air delivered to the fuel cell unit (3).

## Revendications

1. Dispositif de refroidissement de composants d'un véhicule, comprenant un circuit d'agent réfrigérant (1) dans lequel sont disposés un premier appareillage (3) devant être refroidi, un premier échangeur de chaleur (4) et un appareil de commande (7), l'appareil de commande (7) commandant en fonction de paramètres de service au moins la capacité de refoulement d'une pompe d'agent réfrigérant (6) et d'un ventilateur (5) associé au premier échangeur de chaleur (4) et un conduit de dérivation (9) commandé au moyen d'une soupape (8) et dans lequel est disposé un second échangeur de chaleur (10) balayé par de l'air frais au moyen d'un second ventilateur (22) et utilisé dans des buts de chauffage est prévu en parallèle avec le premier échangeur de chaleur (4) dans le circuit d'agent réfrigérant (1),
caractérisé en ce que
le second échangeur de chaleur (10) est balayé en plus par un second circuit d'agent réfrigérant (2) dans lequel au moins un autre appareillage (20) est disposé.

2. Circuit de refroidissement d'un véhicule selon la revendication 1, caractérisé en ce qu'une seconde pompe d'agent réfrigérant (21) est prévue dans le second circuit (2) d'agent réfrigérant.

3. Circuit de refroidissement d'un véhicule selon la revendication 1, caractérisé en ce que la capacité de refoulement de la seconde pompe d'agent réfrigérant (21) et/ou du second ventilateur (22) est aussi commandée par l'appareil de commande (7) en fonction de paramètres de service.

4. Circuit de refroidissement d'un véhicule selon la revendication 1, caractérisé en ce que l'air chauffé par le second échangeur de chaleur (10) est sélectivement évacué dans l'environnement ou dirigé dans l'habitacle dans un but de chauffage.

5. Circuit de refroidissement d'un véhicule selon la revendication 1, caractérisé en ce que le premier appareillage à refroidir est un module à piles à combustible (3).

6. Circuit de refroidissement d'un véhicule selon la revendication 1, caractérisé en ce que le premier appareillage à refroidir est un échangeur de chaleur eau/eau (27) qui est balayé en plus par un troisième circuit d'agent réfrigérant (26) circulant dans le module à piles à combustibles (3).

7. Circuit de refroidissement d'un véhicule selon la revendication 5 ou 6, caractérisé en ce qu'un moteur électrique (19) équipé d'un variateur correspondant de puissance (20) est disposé dans le second circuit d'agent réfrigérant (2).

8. Circuit de refroidissement d'un véhicule selon la revendication 5 ou 6, caractérisé en ce qu'un quatrième conduit de dérivation (15) dans lequel le module de commande (16) d'un compresseur d'alimentation en air du module à piles à combustible (3) et/ou d'un troisième échangeur de chaleur (17) de refroidissement de l'air dirigé sur le module à piles à combustible (3), est prévu dans le premier circuit de refroidissement (1) en parallèle avec l'appareillage à refroidir (3).
